# EUROPÄISCHE PATENTSCHRIFT

(11) **EP 2 098 734 B1**
(45) Veröffentlichungstag und Bekanntmachung des Hinweises auf die Patenterteilung: **10.09.2014**
(21) Anmeldenummer: 09003275.6
(22) Anmeldetag: 06.03.2009
(51) Int. Cl.: F15B 15/06

(54) **Pneumatischer oder hydraulischer Drehantrieb**
Pneumatic or hydraulic rotary drive
Entraînement rotatif pneumatique ou hydraulique

(30) Priorität: 07.03.2008 DE 202008003340 U
(43) Veröffentlichungstag der Anmeldung: 09.09.2009
(73) Patentinhaber: Hoenmanns, Heinz, 50259 Pulheim (DE)
(72) Erfinder: Hoenmanns, Heinz, 50259 Pulheim (DE)
(74) Vertreter: Binner, Bernhard

(56) Entgegenhaltungen:
- GB-A- 792 722

## Beschreibung

Die Erfindung betrifft einen pneumatischen oder hydraulischer Drehantrieb, zum drehenden Antrieb einer Drehwelle insbesondere eines Absperrventils, mit wenigstens einem Linearantrieb und einem mit einem Antriebshebel versehenen Freilauf, wobei der Antriebshebel durch den Linearantrieb oder durch die Linearantriebe in eine um die Drehachse des Freilaufs alternierende Schwenkbewegung antreibbar ist.

Pneumatische oder hydraulische Drehantriebe sind weithin bekannt. Diese dienen beispielsweise zum drehenden Antrieb der Drehwelle von Absperrventilen, Kugelhähnen, Klappen, Türen und dgl. mehr, siehe GB 792 722.

So ist beispielsweise in der DE 298 04 298 U1 ein pneumatischer oder hydraulischer Drehantrieb offenbart, bei welchem die Drehbewegung durch einen "kreisförmigen" Kolben bewirkt wird. Dieser Kolben ist beweglich in einem ringförmigen Zylinder aufgenommen und beidseitig mit entsprechendem Druckmedium beaufschlagbar. Dabei werden die Drehkräfte des sich im ringförmigen Zylinder bewegenden Kolbens über einen im Zylinder angeordneten, bogenförmig verlaufenden Übertragungshebel auf eine zentrisch angeordnete Drehwelle übertragen. Über diverse Stellschrauben ist dabei der maximale Stellweg des Kolbens und damit der maximale Drehwinkel des Übertragungshebels einstellbar. Aufgrund der ringförmigen Ausgestaltung des Zylinders sowie des sich darin bewegenden Kolbens sind hier maximale Drehwinkel von bis zu ca. 135° erreichbar. Demzufolge ist ein solcher Drehantrieb nicht geeignet, um Drehwellen beispielsweise eines Absperrschiebers anzutreiben, bei welchem mehr als die genannten 135° zum vollständigen Öffnen bzw. Schließen beispielsweise des Absperrschiebers erforderlich sind.

Weiter sind aus den Druckschriften DE 27 48 955 C2 und DE 39 27 396 C2 pneumatische oder hydraulische Drehantriebe bekannt, welche insbesondere zum drehenden Antrieb einer Schwenktür oder zum Antrieb der Drehwelle eines mit einem "Küken" versehenen Absperrhahns eingesetzt werden sollen.

Der Gegenstand der DE 27 48 955 C2 ist insbesondere als Drehantrieb für Kraftfahrzeugtüren vorgesehen und kann direkt als Teil der "Schwenksäule" der Kraftfahrzeugtür ausgebildet sein. Dieser Drehantrieb weist eine Art Kulissenführung auf, mittels welcher eine Axialbewegung eines Kolbens in eine Drehbewegung eines "Antriebs" umgesetzt wird. Bei diesem Drehantrieb ist ein Zylinder vorgesehen, in welchem der Kolben axial verstellbar aufgenommen wird. Der Kolben ist als Hohlkolben ausgebildet und nimmt einen sogenannten Abtrieb auf, welcher im Gehäuse des Zylinders axial unverschiebbar und drehbar gelagert ist. Der Hohlkolben steht mit dem Gehäuse des Zylinder über radial vorstehende Führungselemente in Verbindung, wobei diese Führungselemente in innere "wendelförmig" im Gehäuse angeordnete Führungsbahnen des Gehäuses eingreifen. Weiter weist der Hohlkolben radial nach innen vorstehende Führungselemente auf, welche wiederum in entweder ebenfalls "wendelförmig" oder auch geradlinig verlaufende Führungsbahnen des zylindrisch ausgebildeten Abtriebs eingreifen.

Wird der Hohlkolben beim Gegenstand der DE 27 48 955 C2 mit Druckmedium beaufschlagt, so bewegt sich der Hohlkolben innerhalb des Zylinders und wird durch seine mit den inneren Führungsbahnen des Gehäuses in Eingriff stehenden äußeren Führungselemente in Drehung versetzt. Diese Drehbewegung wird über die inneren Führungselemente und die Führungsbahnen des Abtriebs auf den Abtrieb übertragen. Der Abtrieb seinerseits treibt wiederum eine mit dem Abtrieb feststehend in Verbindung stehende und aus dem Zylinder herausragende Drehwelle an, wodurch eine Schwenkbewegung beispielsweise eben einer Tür bewirkt wird. Da insbesondere bei Türantrieben nur relativ kleine Drehwinkel im Bereich von maximal bis zu 180° erforderlich sind, ist ein solcher nach Art einer Kulissenführung ausgebildeter pneumatischer oder hydraulischer Drehantrieb durchaus geeignet. Für größere benötigte Drehwinkel kann ein solcher Drehantrieb allerdings nicht eingesetzt werden.

Beim Gegenstand der DE 39 27 396 C2 geht es ebenfalls um einen pneumatischen oder hydraulischen Drehantrieb für einen Absperrhahn, bei welchem eine Art "Kulissenführung" vorgesehen ist. Dieser Absperrhahn weist ein sogenanntes "Küken" auf, welches aus seiner geöffneten Stellung in seine Schließstellung durch Drehung um maximal 90° bringbar ist. Über die vorgesehene Kulissenführung wird beim Gegenstand der DE 39 27 396 C2 ebenfalls eine lineare Hubbewegung eines Arbeitskolbens eines Arbeitszylinders in eine Drehbewegung umgesetzt. Dementsprechend ist dieser Drehantrieb für einen Absperrhahn, wie beispielsweise einen Kugelabsperrhahn, geeignet, welcher einen zur Drehachse des Absperrkükens koaxialen Linearantrieb aufweist, dessen Hubbewegung über ein sogenanntes Schraubgetriebe (Kulissenführung) in die Drehbewegung eines Abtriebsgliedes überführt wird. Dieses Abtriebsglied weist eine erste Steuerhülse mit sich diametral gegenüberliegenden, axial verlaufenden Langlöchern auf. Dieser ersten Steuerhülse ist eine zweite Steuerhülse zugeordnet, welche koaxial zur ersten Steuerhülse angeordnet ist und mit einem Paar schraubenförmig verlaufender Langlöcher versehen ist. Die schraubenförmig verlaufenden Langlöcher der zweiten Steuerhülse überlappen die axialen Langlöcher der ersten Steuerhülse. Weiter ist eine zentrale, konzentrisch in den Steuerhülsen angeordnete Stange mit einem "diametralen" Querbolzen vorgesehen, der die Paare von Langlöchern der beiden Steuerhülsen durchragt.

Beim Gegenstand der DE 39 27 396 C2 wird durch eine pneumatisch oder hydraulisch bewirkte axiale Relativbewegung dieser beiden Steuerhülsen gegeneinander eine Drehbewegung der ersten Steuerhülse bewirkt, welche mit einem Vierkant des Kükens des Absperrhahns drehfest in Eingriff steht. Durch entsprechende Auslegung der schraubenförmig verlaufenden Langlöcher der zweiten Steuerhülse sind so Drehwinkel von 90° erreichbar. Auch ein solcher Drehantrieb ist nicht für den Antrieb einer Drehwelle beispielsweise eines Absperrschiebers einsetzbar, bei welchem mehrere Umdrehungen notwendig sind, um den Absperrschieber vollständig zu schließen bzw. zu öffnen.

Aus den beiden Druckschriften DE 81 18 213 U1 und DE 81 26 035 U1 sind pneumatische Drehantriebe bekannt, welche nach dem "Zahnstangenprinzip" arbeiten. Mit diesen Drehantrieben lässt sich die Drehwelle beispielsweise eines Drehschiebers, Kugelhahnes, einer Klappe oder dgl. um mehrere Umdrehungen drehen, so dass hier beispielsweise auch ein Absperrschieber vollständig geöffnet bzw. geschlossen werden kann. Nachteilig an diesen Konstruktionen ist insbesondere, dass hier einerseits nur relativ geringe Kräfte aufbringbar sind. Andererseits sind aber auch Zwischenpositionen, welche beispielsweise zur Steuerung oder Regelung eines definierten Durchflusses eines Absperrschiebers notwendig sein können, nicht oder jedenfalls nur schwer - mit einem entsprechend hohen Steuerungsaufwand - einstellbar.

Weiter ist aus der DE 203 15 087 U1 eine "Drehantriebsvorrichtung" mit einer drehbar gelagerten Antriebswelle bekannt. Diese Antriebswelle ist mit einem "fluidbetätigten" Kontraktionsantrieb gekoppelt, der einen sich zwischen zwei Kopfstücken erstreckenden Kontraktionsschlauch aufweist. Dieser Kontraktionsschlauch mit seinen beiden Kopfstücken verhält sich bei Änderungen der Druckbeaufschlagung ähnlich wie ein Arbeitszylinder und erfährt dementsprechend eine Kontraktion oder Streckung. Das eine, ertse Kopfstück ist dabei ortsfest auf einer Grundplatte festgelegt während das andere, zweite Kopfstück an einem hin und her schwenkbaren Schenkhebel angreift. Dieser Schwenkhebel ist über eine bei lediglich einer Schwenkrichtung ein Drehmoment übertragenden Freilaufkupplung mit einer Antriebwelle gekoppelt. Durch eine alternierende Schwenkbewegung wird somit eine Drehbewebung der Antriebswelle bewirkt. Nachteilig ist bei diesem System einerseits, dass durch den verwendeten Kontraktionsschlauch nur geringere Antriebskräfte auf den Freilauf ausgeübt werden können. Andererseits ist eine Steuerung oder Regelung der Drehgeschwindigkeit nur schwer möglich. Außerdem ist durch den eingesetzten Freilauf eine bestimmte Drehrichtung der Drehwelle (Antriebswelle) vorgegeben.

Dementsprechend liegt der Erfindung die Aufgabe zugrunde, einen pneumatischen oder hydraulischen Drehantrieb derart auszugestalten, dass einerseits bei hohen Stellkräften bzw. Drehkräften ein Öffnen und Schließen, insbesondere eines Absperrschiebers durch Änderung der Drehrichtung der Drehwelle ermöglicht wird. Des Weiteren sollen wenigstens annähernd beliebige Zwischenstellung des Absperrschiebers sowie unterschiedliche Drehgeschwindigkeiten der Drehwelle einstellbar sein.

Die Aufgabe wird erfindungsgemäß zusammen mit den Merkmalen des Oberbegriffes des Anspruches 1 dadurch gelöst, dass der Linearantrieb aus einem pneumatischen oder hydraulischen Arbeitszylinder gebildet wird und, dass der Schwenkwinkel des Antriebshebels mittels eines verstellbaren Anschlages zwischen einem Wert Null und einem durch den maximalen Hub des Arbeitszylinder sowie der Hebellänge des Antriebshebels bestimmten Maximalwinkel einstellbar ist und, dass der Freilauf zur Änderung der Drehrichtung der Drehwelle als umschaltbarer Freilauf ausgebildet ist.

Durch die erfindungsgemäße Ausgestaltung wird ein pneumatischer oder hydraulischer Drehantrieb zur Verfügung gestellt, mittels welchem einerseits hohe Stellkräfte auf die Drehwelle eines Absperrschiebers aufbringbar sind. Andererseits sind mit dem erfindungsgemäßen Drehantrieb auch unterschiedliche Zwischenpositionen des Sperrschiebers zu einer optimalen Durchflussregelung durch entsprechendes Öffnen und Schließen des Absperrschiebers variabel einstellbar.

Dazu ist die Drehwelle des Absperrschiebers mit einem umschaltbaren Freilauf verbunden, welcher in zwei drehende Antriebsrichtungen umschaltbar ist. Für den Antrieb des Freilaufs ist ein im Wesentlichen radial zum Freilauf verlaufender Antriebshebel vorgesehen. Der Antriebshebel wird beim erfindungsgemäßen Drehantrieb mittels eines Arbeitszylinders oder zweier Arbeitszylinder um die Drehachse des Freilaufs geschwenkt. Dabei wird durch den oder die Arbeitszylinder eine alternierende Schwenkbewegung des Antriebshebels bewirkt, so dass über den Freilauf die Drehwelle insbesondere des Absperrschiebers schrittweise in die eine oder andere Richtung gedreht wird. Durch eine entsprechende Ansteuerung des Arbeitszylinders oder der Arbeitszylinder sind hier unterschiedliche Drehgeschwindigkeiten erreichbar, wie auch annähernd jede beliebige Zwischenstellung des mit der Drehwelle in Verbindung stehenden Absperrschiebers.

Die erreichbaren Zwischenstellungen des Absperrschiebers sind insbesondere dadurch (zumindest annähernd) beliebig einstellbar, dass der Schwenkwinkel des Antriebshebels mittels eines verstellbaren Anschlages zwischen einem Wert 0 und einem durch den maximalen Hub des Arbeitszylinders sowie der Hebellänge des Antriebshebels bestimmten maximalen Winkel einstellbar ist. Durch diese Veränderbarkeit des Arbeitshubes ist insbesondere bei kleinem Arbeitshub annähernd jede beliebige Zwischenstellung der Drehwelle ansteuerbar, so dass beispielsweise die Steuerkurve eines Absperrschiebers variabel anfahrbar ist. Außerdem ist durch diese Ausgestaltung auch die Drehzahl der intermittierend angetriebenen Drehwelle (in gewissen Grenzen) einstellbar.

Gemäß Anspruch 2 kann dabei der Arbeitszylinder als federbelasteter Arbeitszylinder ausgebildet sein, bei dessen Arbeitshub die Drehbewegung der Drehwelle bewirkt wird. Eine solche Ausgestaltung des Arbeitszylinders ist insbesondere bei äußerst leichtgängigen Drehwellen von Vorteil, da hier eine äußerst einfache Ansteuerung des Arbeitszylinders ermöglicht wird.

Ist es erforderlich, in beiden Drehrichtungen äußerst hohe Drehmomente zur Erzeugung der Drehbewegung aufzubringen, so kann gemäß Anspruch 3 der Arbeitszylinder als zweiseitig wirkender Arbeitszylinder ausgebildet sein. D.h., dass hier in beiden Hubrichtungen ein "Arbeitshub" ausgeführt wird, durch welchen bei entsprechender Druckbeaufschlagung des Arbeitszylinders hohe "Schubkräfte" aufbringbar sind, so dass der Antriebshebel mit großen Kräften um die Drehachse der Drehwelle bzw. des Freilaufes geschwenkt werden kann.

Alternativ zu Anspruch 3 kann gemäß Anspruch 4 auch vorgesehen sein, dass zum Antrieb des Antriebshebels zwei gegenläufig wirkende Arbeitszylinder vorgesehen sind.

Um die Drehgeschwindigkeit der Drehwelle steuern zu können, kann gemäß Anspruch 5 vorgesehen sein, dass die Hubfrequenz des Arbeitszylinders oder der Arbeitszylinder insbesondere durch eine Drehschiebersteuerung einstellbar ist. Dies bedeutet, dass die Arbeitsfrequenz des Arbeitszylinders (oder der Arbeitszylinder) unterschiedlich einstellbar ist, so dass bei höherer Arbeitsfrequenz eine höhere Drehgeschwindigkeit und bei geringerer Arbeitsfrequenz eine geringere Drehgeschwindigkeit der Drehwelle (bei gleichem Arbeitshub) erreichbar ist.

Dabei kann gemäß Anspruch 6 der verstellbare Anschlag in Form eines um eine Steuerwelle drehbaren Anschlagnockens oder einer Exzenterscheibe ausgebildet sein. Durch diesen Anschlagnocken ist beispielsweise der Antriebshebel in einer "0-Stellung" fixierbar, bei welchem eine Hubbewegung des Arbeitszylinders (oder der Arbeitszylinder) nicht mehr möglich ist. Dies bedeutet, dass unabhängig von der Ansteuerung des Arbeitszylinders (oder der Arbeitszylinder) eine Schwenkbewegung des Arbeitshebels permanent blockiert ist, also dass trotz Ansteuerung des Arbeitszylinders eine Drehbewegung der Drehwelle des Sperrschiebers verhindert wird. Durch sukzessives Freigeben durch entsprechendes Drehen des Anschlagnockens oder der Exzenterscheibe kann der mögliche Schwenkwinkel des Antriebshebels und somit die maximal mögliche Hubbewegung des Arbeitszylinders unterschiedlich eingestellt werden, so dass sich hieraus unterschiedliche Drehzahlen in beide Drehrichtungen ergeben. Weiter sind hierdurch auch Feineinstellungen der Drehwinkel der Drehwelle möglich, so dass die Sperrstellung beispielsweise eines Absperrschiebers zumindest annähernd stufenlos einstellbar ist.

Dabei kann auch die Steuerwelle des Anschlagnockens gemäß Anspruch 7 mittels eines hydraulischen oder pneumatischen Stellzylinders drehend ansteuerbar sein. Durch diese Ausgestaltung ist insbesondere die Drehzahl sowohl in Schließrichtung als auch in Öffnungsrichtung fernsteuerbar.

Gemäß Anspruch 8 kann vorgesehen sein, dass zum drehenden Antrieb der Steuerwelle ein zweiter Freilauf vorgesehen ist, welcher durch einen Stellzylinder über einen Steuerhebel in einer Drehrichtung antreibbar ist und dass der Anschlagnocken aus einer inaktiven Ausgangsstellung schrittweise in eine aktive Endstellung bringbar ist, in welcher der Schwenkwinkel der Schwenkbewegung des Antriebshebels gleich "Null" ist. Durch diesen zweiten Freilauf kann somit der Anschlagnocken oder die Exzenterscheibe je nach Erfordernis um 360° gedreht werden, so dass hierdurch eine variable Hubbegrenzung für den Arbeitszylinder und somit variabel auch der maximal mögliche Schwenkwinkel des Antriebshebels frei einstellbar ist.

Gemäß Anspruch 9 kann des Weiteren vorgesehen sein, dass der umschaltbare Freilauf für den Antrieb der Drehwelle einen Schalthebel aufweist, über welchen die Antriebsrichtung des Freilaufs umschaltbar ist. Durch diese Ausgestaltung ist ein wahlweises Umschalten der Drehrichtungen in einfacher Weise möglich.

Dabei kann gemäß Anspruch 10 dieser Schalthebel des umschaltbaren Freilaufs mittels eines pneumatischen oder hydraulischen Schaltzylinders umschaltbar sein. Dadurch ist auch die Umschaltung der Drehrichtung des Drehantriebs zum Antrieb der Drehwelle ferngesteuert durchführbar.

Bei Verwirklichung aller Merkmale der vorgenannten Ansprüche ist somit ein fernsteuerbarer Drehantrieb, insbesondere zum Antrieb einer Drehwelle eines Absperrschiebers realisierbar, welcher mit äußerst hohen Drehmomenten ausgestattet ist und durch welchen die Drehwelle mit mehreren Umdrehungen aus einer Schließstellung in eine geöffnete Stellung des Absperrschiebers bringbar ist. Durch diese "Fernsteuerung" ist der erfindungsgemäße Drehantrieb insbesondere in äußerst vorteilhafter Weise in Räumen einsetzbar, die für das Bedienungspersonal ein gewisses Gefährdungspotenzial aufweisen, wie beispielsweise Explosionsgefahr. Der Einsatz eines erfindungsgemäßen Drehantriebes ist dabei nicht auf den "einfachen" Antrieb der Drehwelle eines Absperrschiebers beschränkt. Der erfindungsgemäß Drehantrieb ist auch für den drehenden Antrieb jeder beliebigen Drehwelle einsetzbar. Insbesondere kann der erfindungsgemäße Drehantrieb auch in Fällen eingesetzt werden, in welchen nur kleinere Drehwinkel beispielsweise kleiner 360° erforderlich sind.

Anhand der Zeichnung wird nachfolgend die Erfindung näher erläutert, wobei in den Zeichnungsfiguren der Erfindungsgegenstand lediglich vereinfacht in seiner schematischen Funktionsweise dargestellt ist. Die Erfindung ist demzufolge auch nicht auf die konkrete Ausführungsform beschränkt. Es zeigt:
- Fig. 1: eine schematische Seitenansicht eines erfindungsgemäßen Drehantriebes mit teilweise freigegebenem Antriebshebel;

- Fig. 2: den Drehantrieb aus Fig. 1 mit arretiertem Antriebshebel.

Beim vorliegenden Ausführungsbeispiel besteht der Drehantrieb 1 aus einem zentralen Element in Form eines umschaltbaren Freilaufes 2, welcher über eine Nut-Feder-Verbindung 3 mit einer Drehwelle 4 beispielsweise eines Absperrschiebers (in der Zeichnung nicht weiter dargestellt) in Verbindung steht. Des Weiteren weist dieser Freilauf 2 einen im Wesentlichen radial zum Freilauf 2 verlaufenden Antriebshebel 5 auf, durch dessen alternierende Schwenkbewegung in Richtung des Doppelpfeiles 6 die Drehwelle 4 wahlweise in Richtung des Pfeiles 7 oder in Richtung des Pfeiles 8 schrittweise antreibbar ist.

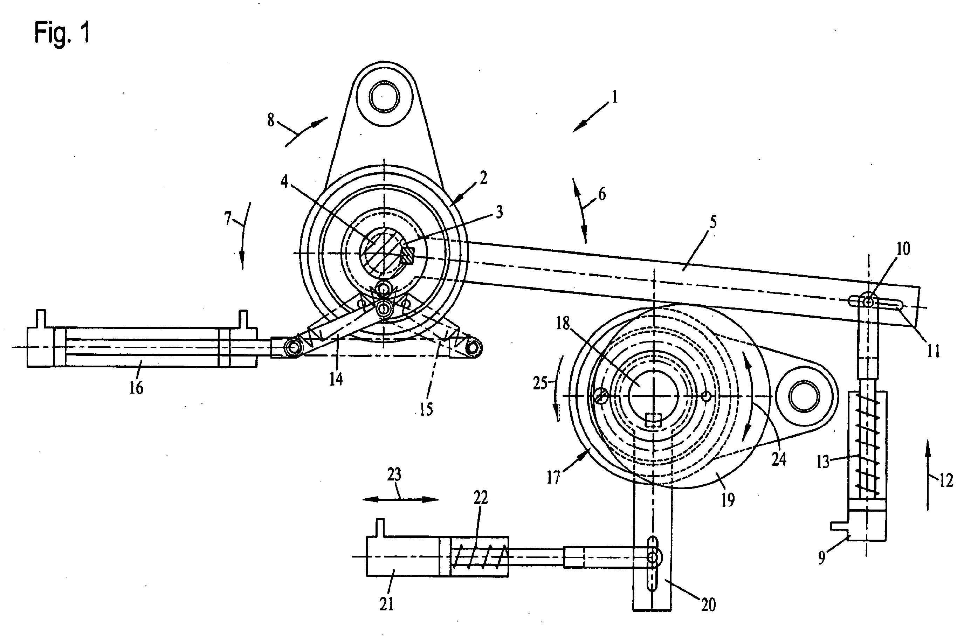

Zur Ausführung dieser alternierenden Schwenkbewegung in Richtung des Doppelpfeiles 6 ist beim dargestellten Ausführungsbeispiel ein einseitig wirkender Arbeitszylinder 9 vorgesehen, welcher über einen entsprechenden Anlenkzapfen 10 mit dem Antriebshebel 5 in Verbindung steht. Dabei kann, wie dies aus Fig. 1 ersichtlich ist, der Anlenkzapfen 10 in einem Langloch 11 des Antriebshebels 5 aufgenommen sein, wobei dieses Langloch 11 im äußeren Endbereich des Antriebshebels 5 angeordnet ist. Diese schematisch dargestellte Verbindung zwischen dem Anlenkhebel 5 und dem Arbeitszylinder 9 kann jedoch auch auf jede andere geeignete Weise realisiert sein.

Bei Beaufschlagung des Arbeitszylinders 9 mit entsprechendem Druckmedium wird dieser in Richtung des Pfeiles 12 ausgelenkt, so dass der Antriebshebel 5 um die Drehachse der Drehwelle 4 in Richtung des Pfeiles 7 geschwenkt wird. Der maximal erreichbare Schwenkwinkel wird dabei durch den maximalen Hub des Arbeitszylinders 9 sowie die radiale Länge des Antriebshebels 5 bestimmt.

Bei diesem einseitig wirkenden Arbeitszylinder 9 wird die Rückstellbewegung durch eine entsprechende im Arbeitszylinder 9 angeordnete Rückstellfeder 13 bewirkt.

Durch Umschalten des Freilaufes 2 wird hingegen die Drehwelle 4 bei der Ausführung der Hubbewegung in Richtung des Pfeiles 12 nicht gedreht, sondern in Richtung der Rückstellbewegung entgegen des Pfeiles 12, so dass sich eine Drehbewegung der Arbeitswelle 4 in Richtung des Pfeiles 8 ergibt.

Es ist erkennbar, dass durch diese Art des Drehantriebes 1 ein einfaches Umschalten der Drehrichtungen einerseits und andererseits ein äußerst hohes Drehmoment erreichbar ist. Sollen hier in beiden Drehrichtungen hohe Drehmomente erreicht werden, so kann der Arbeitszylinder 9 auch als doppelseitig wirkender Arbeitszylinder ausgebildet sein, so dass sowohl in Richtung des Pfeiles 12 als auch in entgegengesetzter Richtung zum Pfeil 12 hohe Schubkräfte des Arbeitszylinders 9 erreichbar sind.

Auch können zwei gegenläufig wirkend angeordnete, einseitig wirkende Arbeitszylinder eingesetzt werden.

Des Weiteren ist aus Fig. 1 erkennbar, dass der Freilauf 2 einen Umschalthebel 14 aufweist, welcher aus der in durchgezogenen Linien dargestellten Schaltposition in eine zweite in Phantomlinien dargestellten Schaltposition 15 bringbar ist, wobei die erste in durchgezogenen Linien dargestellte Schaltposition eine Drehung in Richtung des Pfeiles 7 und die zweite Schaltposition 15 eine Drehung in Richtung des Pfeiles 8 der Drehwelle 4 bewirkt. Zur Betätigung des Umschalthebels 14 kann dabei, wie dies beispielhaft in Fig. 1 schematisch dargestellt ist, ein hydraulischer oder pneumatischer Schaltzylinder 16 vorgesehen sein.

Des Weiteren ist aus Fig. 1 ein zweiter Freilauf 17 erkennbar, auf dessen Steuerwelle 18 ein Anschlagnocken bzw. eine Exzenterscheibe 19 drehfest montiert ist. Zum Antrieb des Freilaufes 17 ist beim vorliegenden Ausführungsbeispiel ein Steuerhebel 20 vorgesehen, welcher mit einem Stellzylinder 21 in Wirkverbindung steht. Dieser Stellzylinder 21 kann ebenfalls als einseitig wirkender Arbeitszylinder ausgebildet sein, dessen Rückstellbewegung ebenfalls durch eine innere Rückstellfeder 22 bewirkt wird. Durch eine entsprechende Ansteuerung führt dieser Stellzylinder 21 eine alternierende Stellbewegung in Richtung des Doppelpfeiles 23 aus, so dass der Steuerhebel 20 um die Drehachse der Steuerwelle 18 eine alternierende Schwenkbewegung in Richtung des Doppelpfeiles 24 ausführt.

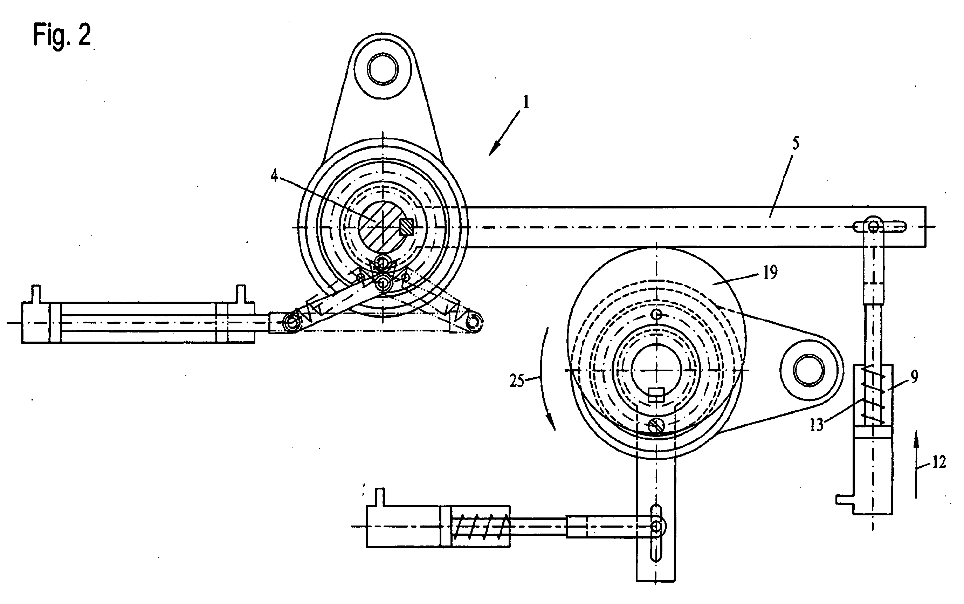

Je nach Ausbildung des Freilaufes 17 wird durch diese alternierende Schwenkbewegung des Steuerhebels 20 in Richtung des Doppelpfeiles 24 eine schrittweise Drehung des Anschlagnockens 19 beispielsweise in Richtung des Pfeiles 25 bewirkt. Dadurch wird der Anschlagnocken 19 schrittweise in eine Sperrstellung gebracht, welche beispielhaft in Fig. 2 dargestellt ist.

In Fig. 2 ist der Anschlagnocken 19 in eine vertikal nach oben gerichtete Endstellung gebracht, bei welcher sich auch der Arbeitszylinder 9 in seiner oberen Endstellung befindet. Die Rückstellfeder 13 ist dabei auf Block gespannt, so dass der Arbeitszylinder 9 keine weitere Hubbewegung in Richtung des Pfeils 12 ausführen kann. D.h., dass unabhängig von der Ansteuerung dieses Arbeitszylinders 9 dieser über die Blockierung des Antriebshebels 5 durch den Anschlagnocken 19 nicht bewegbar ist. Durch schrittweises Weiterdrehen des Anschlagnockens 19 in Richtung des Pfeiles 25 wird der Antriebshebel 5 schrittweise wieder freigegeben, so dass der mögliche Schwenkwinkel des Antriebshebels 5 schrittweise vergrößert wird. Durch diesen Anschlagnocken 19 ist somit die Drehzahl der Drehwelle 4 (bei gleichbleibender Antriebsfrequenz) in gewissen Grenzen einstellbar.

Kann der Antriebshebel 5 nur äußerst geringe Schwenkbewegung ausführen, so sind des Weiteren pro Arbeitshub des Arbeitszylinders 9 auch äußerst kleine Drehwinkel der Drehwelle 4 einstellbar, so dass beispielsweise ein Absperrschieber äußerst fein bezüglich seiner Steuerkurve ansteuerbar ist.

Befindet sich der Anschlagnocken 19 in seiner zur Position der Fig. 2 gegenüberliegenden unteren Stellung, ist der Antriebshebel 5 vollständig freigegeben, so dass der Arbeitszylinder 9 seinen maximal möglichen Hub ausführen kann. In dieser Stellung ist somit eine maximale Drehzahl der Drehwelle 4 (bei gleichbleibender Antriebsfrequenz) erreichbar.

Des Weiteren kann die Arbeitsfrequenz des Arbeitszylinders 9 ebenfalls variabel einstellbar sein. Auch durch diese Maßnahme ist die Drehzahl der Drehwelle 4 variabel einstellbar.

Dieser erfindungsgemäße pneumatische oder hydraulische Drehantrieb 1, wie dieser schematisch in den Fig. 1 und 2 dargestellt ist, ist insbesondere zur Betätigung von beispielsweise Absperrschiebern geeignet, welche sich in einem explosionsgefährdeten Raum befinden. In einem solchen Raum ist beispielsweise ein elektrischer Antrieb der Drehwelle 4 aufgrund der bestehenden Explosionsgefahr nicht ohne weiteres möglich. Soll eine solche Drehwelle 4 in einem solchen Raum über einen elektrischen Antrieb angesteuert werden, so sind zusätzliche Maßnahmen notwendig, um eine Explosion beispielsweise durch entstehende Funken beim Aktivieren des elektrischen Antriebs sicher auszuschließen.

## Patentansprüche

1. Pneumatischer oder hydraulischer Drehantrieb (1), insbesondere zum drehenden Antrieb (Pfeile 7 und 8) einer Drehwelle (4) eines Absperrventils, mit wenigstens einem Arbeitszylinder (9) und einem mit einem Antriebshebel (5) versehenen Freilauf (2), dessen Antriebshebel (5) durch den Arbeitszylinder (9) oder bzw durch die Arbeitszylinder (9) in eine um die Drehachse des Freilaufs (2) alternierende Schwenkbewegung (Doppelpfeil 6) antreibbar ist,
**dadurch gekennzeichnet,**
**dass** der Schwenkwinkel des Antriebshebels (5) mittels eines verstellbaren Anschlages (19) zwischen einem Wert Null und einem durch.den maximalen Hub des Arbeitszylinder (9) sowie der Hebellänge des Antriebshebels (5) bestimmten Maximalwinkel einstellbar ist und,
**dass** der Freilauf (2) zur Änderung der Drehrichtung (Pfeile 7 und 8) der Drehwelle (4) als umschaltbarer Freilauf (2) ausgebildet ist.

2. Drehantrieb nach Anspruch 1, **dadurch gekennzeichnet, dass** der Arbeitszylinder (9) als federbelasteter Arbeitszylinder (9) ausgebildet ist, bei dessen Arbeitshub die Drehbewegung (Pfeile 7 und 8) der Drehwelle (4) bewirkt wird.

3. Drehantrieb nach Anspruch 1, **dadurch gekennzeichnet, dass** der Arbeitszylinder (9) als zweiseitig wirkender Arbeitszylinder ausgebildet ist.

4. Drehantrieb nach Anspruch 1, **dadurch gekennzeichnet, dass** zum Antrieb des Antriebshebels (5) zwei gegenläufig wirkende Arbeitszylinder vorgesehen sind.

5. Drehantrieb nach einem der Ansprüche 1 bis 4, **dadurch gekennzeichnet, dass** die Hubfrequenz des Arbeitszylinders oder der Arbeitszylinder, insbesondere durch eine Drehschiebersteuerung einstellbar ist.

6. Drehantrieb nach einem der Ansprüche 1 bis 5, **dadurch gekennzeichnet, dass** der verstellbare Anschlag in Form eines um eine Steuerwelle (18) drehbaren Anschlagsnockens (19) oder einer Exzenterscheibe (19) ausgebildet ist.

7. Drehantrieb nach Anspruch 6, **dadurch gekennzeichnet, dass** die Steuerwelle (18) mittels eines hydraulischen oder pneumatischen Stellzylinders (21) drehend ansteuerbar ist.

8. Drehantrieb nach Anspruch 7, **dadurch gekennzeichnet, dass** zum drehenden Antrieb der Steuerwelle (18) ein zweiter Freilauf (17) vorgesehen ist, welcher durch einen Stellzylinder (21) über einen Steuerhebel (20) in einer Drehrichtung (Pfeil 25) antreibbar ist und, dass der Anschlagnocken (19) aus einer inaktiven Ausgangsstellung schrittweise in eine aktive Endstellung bringbar ist, in welcher der Schwenkwinkel der Schwenkbewegung des Antriebshebels (5) gleich "Null" ist.

9. Drehantrieb nach einem der Ansprüche 1 bis 8, **dadurch gekennzeichnet, dass** der umschaltbare Freilauf (2) für den Antrieb der Drehwelle (4) einen Umschalthebel (14) aufweist, über welchen die Antriebsrichtung (Pfeile 7 und 8) des Freilaufs (2) umschaltbar ist.

10. Drehantrieb nach Anspruch 9, **dadurch gekennzeichnet, dass** der Umschalthebel (14) des umschaltbaren Freilaufs (2) mittels eines pneumatischen oder hydraulischen Schaltzylinders (16) umschaltbar ist.

## Claims

1. Pneumatic or hydraulic rotary drive (1), in particular for the rotational drive (arrows 7 and 8) of a rotary shaft (4) of a shut-off valve, having at least one working cylinder (9) and a freewheel (2) which is provided with a drive lever (5), the said drive lever (5) of which can be driven by the working cylinder (9) or by the working cylinders (9) in an alternating pivoting movement (double arrow 6) about the rotational axis of the freewheel (2), **characterized in that** the pivoting angle of the drive lever (5) can be set by means of an adjustable stop (19) between a zero value and a maximum angle which is defined by the maximum stroke of the working cylinder (9) and the lever length of the drive lever (5), and **in that** the freewheel (2) is configured as a switchable freewheel (2) for changing the rotational direction (arrows 7 and 8) of the rotary shaft (4).

2. Rotary drive according to Claim 1, **characterized in that** the working cylinder (9) is configured as a spring-loaded working cylinder (9), during the working stroke of which the rotational movement (arrows 7 and 8) of the rotary shaft (4) is brought about.

3. Rotary drive according to Claim 1, **characterized in that** the working cylinder (9) is configured as a double-acting working cylinder.

4. Rotary drive according to Claim 1, **characterized in that** two working cylinders which act in opposite directions are provided for driving the drive lever (5).

5. Rotary drive according to one of Claims 1 to 4, **characterized in that** the stroke frequency of the working cylinder or the working cylinders can be set, in particular by a rotary slide controller.

6. Rotary drive according to one of Claims 1 to 5, **characterized in that** the adjustable stop is configured in the form of an eccentric disc (19) or a stop cam (19) which can be rotated about a control shaft (18).

7. Rotary drive according to Claim 6, **characterized in that** the control shaft (18) can be actuated rotationally by means of a hydraulic or pneumatic actuating cylinder (21).

8. Rotary drive according to Claim 7, **characterized in that** a second freewheel (17) is provided for rotationally driving the control shaft (18), which second freewheel (17) can be driven in a rotational direction (arrow 25) by an actuating cylinder (21) via a control lever (20), and **in that** the stop cam (19) can be moved step by step from an inactive initial position into an active end position, in which the pivoting angle of the pivoting movement of the drive lever (5) is equal to "zero".

9. Rotary drive according to one of Claims 1 to 8, **characterized in that** the switchable freewheel (2) for driving the rotary shaft (4) has a switchover lever (14), via which the drive direction (arrows 7 and 8) of the freewheel (2) can be switched over.

10. Rotary drive according to Claim 9, **characterized in that** the switchover lever (14) of the switchable freewheel (2) can be switched over by means of a pneumatic or hydraulic switching cylinder (16).

## Revendications

1. Entraînement rotatif (1) pneumatique ou hydraulique, en particulier pour l'entraînement en rotation (flèches 7 et 8) d'un arbre rotatif (4) d'une soupape d'arrêt, comprenant au moins un cylindre de travail (9) et une roue libre (2) pourvue d'un levier d'entraînement (5), dont le levier d'entraînement (5) peut être entraîné par le cylindre de travail (9) ou par les cylindres de travail (9) suivant un mouvement de pivotement (double flèche 6) alternatif autour de l'axe de rotation de la roue libre (2),
**caractérisé**
**en ce que** l'angle de pivotement du levier d'entraînement (5) peut être ajusté entre une valeur nulle et un angle maximal défini par la course maximale du cylindre de travail (9) ainsi que par la longueur de levier du levier d'entraînement (5) et
**en ce que** la roue libre (2) est réalisée sous forme de roue libre (2) commutable pour la modification du sens de rotation (flèches 7 et 8) de l'arbre rotatif (4).

2. Entraînement rotatif selon la revendication 1, **caractérisé en ce que** le cylindre de travail (9) est réalisé sous forme de cylindre de travail (9) sollicité par ressort, durant la course de travail duquel le mouvement rotatif (flèches 7 et 8) de l'arbre rotatif (4) est provoqué.

3. Entraînement rotatif selon la revendication 1, **caractérisé en ce que** le cylindre de travail (9) est réalisé sous forme de cylindre de travail à double action.

4. Entraînement rotatif selon la revendication 1, **caractérisé en ce que** deux cylindres de travail agissant en sens contraires sont prévus pour l'entraînement du levier d'entraînement (5).

5. Entraînement rotatif selon l'une quelconque des revendications 1 à 4, **caractérisé en ce que** la fréquence de course du cylindre de travail ou des cylindres de travail peut être ajustée en particulier au moyen d'une commande par tiroir rotatif.

6. Entraînement rotatif selon l'une quelconque des revendications 1 à 5, **caractérisé en ce que** la butée réglable est réalisée sous la forme d'une came de butée (19) pouvant tourner autour d'un arbre de commande (18) ou sous la forme d'un disque excentrique (19).

7. Entraînement rotatif selon la revendication 6, **caractérisé en ce que** l'arbre de commande (18) peut être commandé en rotation au moyen d'un cylindre de réglage (21) hydraulique ou pneumatique.

8. Entraînement rotatif selon la revendication 7, **caractérisé en ce qu'**une deuxième roue libre (17) est prévue pour l'entraînement en rotation de l'arbre de commande (18), laquelle roue libre peut être entraînée dans un sens de rotation (flèche 25) au moyen d'un cylindre de réglage (21) par le biais d'un levier de commande (20), et **en ce que** la came de butée (19) peut être amenée progressivement d'une position initiale inactive à une position finale active dans laquelle l'angle de pivotement du mouvement de pivotement du levier d'entraînement (5) est égal à « zéro ».

9. Entraînement rotatif selon l'une quelconque des revendications 1 à 8, **caractérisé en ce que** la roue libre commutable (2) pour l'entraînement de l'arbre rotatif (4) comprend un levier de commutation (14) par le biais duquel le sens d'entraînement (flèches 7 et 8) de la roue libre (2) peut être commuté.

10. Entraînement rotatif selon la revendication 9, **caractérisé en ce que** le levier de commutation (14) de la roue libre commutable (2) peut être commuté au moyen d'un cylindre de commutation (16) pneumatique ou hydraulique.
